**Europäisches Patentamt**

(19) **European Patent Office**

**Office européen des brevets**

(11) Numéro de publication: **0 229 576**
**B1**

(12) **FASCICULE DE BREVET EUROPEEN**

(45) Date de publication du fascicule du brevet:
**10.01.90**

(51) Int. Cl.⁴: **B60G 21/04**

(21) Numéro de dépôt: **86420295.7**

(22) Date de dépôt: **28.11.86**

(54) **Essieu semi-rigide pour véhicule.**

(30) Priorité: **02.12.85 FR 8518367**

(43) Date de publication de la demande:
**22.07.87 Bulletin 87/30**

(45) Mention de la délivrance du brevet:
**10.01.90 Bulletin 90/2**

(84) Etats contractants désignés:
**AT BE CH DE ES GB GR LI LU NL SE**

(56) Documents cités:
**FR-A- 776 562**
**FR-A- 2 292 604**
**FR-A- 2 384 565**
**FR-A- 2 521 919**
**US-A- 4 429 899**

(73) Titulaire: **VALLOUREC, 130, rue de Silly,**
**F-92100 Boulogne-Billancourt(FR)**

(72) Inventeur: **Bonjean, Didier, 4, rue Sadi Carnot,**
**F-92600 Asnières-sur-Seine(FR)**
Inventeur: **Deslande, Raymond, 22 Impasse Descartes,**
**F-51000 Châlon-sur-Marne(FR)**

(74) Mandataire: **Desolneux, Jean-Paul Charles, Setval**
**Division Propriété Industrielle 130, rue de Silly,**
**F-92100 Boulogne-Billancourt(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un essieu semi-rigide, utilisé en particulier pour réaliser le train-arrière d'un véhicule automobile. L'invention concerne également un procédé de réalisation d'un tel essieu. Il s'agit d'un essieu en forme de U, comportant une traverse, reliée à la caisse du véhicule de façon articulée, et deux bras aux extrémités desquels sont fixées des fusées sur lesquelles sont montées les roues.

Cet essieu permet d'assurer le guidage des roues et a une fonction anti-dévers (appelée aussi anti-roulis). Un tet essien est connu du cocument de brevet FR-A 2 292 604.

Suivant l'invention, cet essieu a une structure monobloc qui résulte du formage d'une seule longueur d'un tube.

Des essieux arrières semi-rigides pour véhicules sont connus qui assurent les deux mêmes fonctions, mais ces essieux sont généralement réalisés en trois parties : une traverse et deux bras assemblés chacun à une extrémité de cette traverse, par exemple par soudage. Il est en effet nécessaire, pour qu'un essieu semi-rigide puisse remplir les fonctions qu'on en attend, de réaliser une traverse, présentant une rigidité suffisante en flexion, alliée à une aptitude suffisante à la déformation élastique en torsion.

En effet, les bras montés aux deux extrémités de la traverse doivent pouvoir tourner l'un par rapport à l'autre, autour de l'axe de cette traverse, par torsion élastique de celle-ci, les axes des roues restant pratiquement parallèles entre eux pendant cette rotation. Pour que ce résultat soit atteint, il est nécessaire que chaque bras ait à la fois une grande résistance à la flexion et à la torsion. Ces résistances combinées avec la résistance à la flexion de la traverse, sont en particulier nécessaires pour s'opposer aux couples de torsion et de flexion créés en virage par l'adhérence du pneu au sol.

En réalisant l'essieu en trois pièces séparées, on peut donner à chacune les caractéristiques optimales, leur assemblage étant ensuite effectué par des moyens bien connus, tels que le soudage par exemple. Les essieux ainsi obtenus ont l'inconvénient d'être relativement coûteux car ils font appel à plusieurs composants qu'il faut fabriquer séparément puis solidariser entre eux. De plus, ces essieux sont relativement lourds car, au niveau des zones d'assemblage, les sections doivent être renforcées.

On a recherché la possibilité de réaliser un essieu semi-rigide du type qui vient d'être décrit, allégé par rapport aux essieux existants, ayant une structure monobloc ne nécessitant pas d'assemblage et présentant par ailleurs les caractéristiques mécaniques lui permettant de remplir les deux fonctions principales qui viennent d'être précisées.

L'essieu semi-rigide, en forme de U, qui fait l'objet de l'invention, est caractérisé par une structure monobloc tubulaire et comporte une zone médiane, qui constitue la traverse, qui est profilée de façon à présenter au moins une aile à double paroi ; à chaque extrémité de la traverse, au-delà de la zone profilée, il existe une zone cintrée sensiblement à angle droit qui se prolonge par un bras à l'extrémité duquel est prévue la fixation de la fusée sur laquelle sera montée la roue. L'épaisseur de l'essieu tubulaire ainsi défini peut être constante sur toute la longueur de la pièce ou présenter des variations pour mieux s'adapter aux contraintes auxquelles il doit résister tout en présentant le poids minimum.

Cet essieu semi-rigide est avantageusement réalisé en acier.

Le profil de la traverse, vue en coupe perpendiculairement à son axe, est de préférence en L, en T, en U, en V, en X ou en H. Dans la zone cintrée, la section du tube est avantageusement sensiblement circulaire.

Dans la zone médiane profilée, les deux parois d'au moins une aile sont avantageusement au contact l'une de l'autre. Les bras ont une section circulaire ou ovalisée ou d'autres formes tubulaires voisines, sur au moins une partie de leur longueur.

L'invention concerne également un procédé de réalisation d'un essieu semi-rigide, en forme de U, dans lequel on met en oeuvre une seule longueur d'un tube métallique, de section circulaire ou non circulaire, dont on déforme la zone médiane de façon à lui donner la forme d'un profilé rectiligne comprenant au moins une aile à double paroi, ce profilé constituant la traverse de l'essieu, et dans lequel on cintre sensiblement à angle droit la partie tubulaire au-delà de chaque extrémité de la zone profilée, en réservant une longueur suffisante de tube au-delà de chaque zone cintrée, pour constituer les bras d'essieu aux extrémités desquels seront fixées les fusées sur lesquelles seront montées les roues.

Avantageusement, on met en oeuvre un tube de révolution.

Avantageusement également, on met en oeuvre un tube en acier. La zone médiane du tube peut être déformée pour réaliser le profilé, sans ou avec variation d'épaisseur. Cette déformation de la zone médiane est réalisée avantageusement de façon que les deux parois d'au moins une aile viennent au contact l'une de l'autre. La zone médiane peut en particulier être déformée de façon à obtenir un profilé dont la section est en L, en V, en T, en U, en X, ou encore en H. Les bras d'essieu peuvent être de section circulaire ou ovalisée ou d'autres formes tubulaires voisines. Il est aussi possible de modifier la section des zones d'extrémité de ces bras de façon à faciliter la fixation des fusées sur lesquelles seront montées les roues.

Le texte et les figures ci-après décrivent, de façon non limitative, un mode particulier de réalisation de l'invention.

Figure 1 : Vue en plan d'un essieu suivant l'invention.

Figure 2 : Vue en coupe d'un tube pour la mise en oeuvre de l'invention.

Figure 3 : Coupe suivant A-A de la figure 1.

Figure 4 : Vue en coupe d'une section de traverse d'essieu suivant l'invention dont les deux parois de chaque aile sont en appui l'une contre l'autre.

Figure 5 : Vue en coupe d'une section de traverse d'essieu suivant l'invention ayant un profil en H.

Figure 6 : Vue suivant son axe de l'extrémité ovalisée d'un bras d'essieu dans la zone de fixation de la fusée.

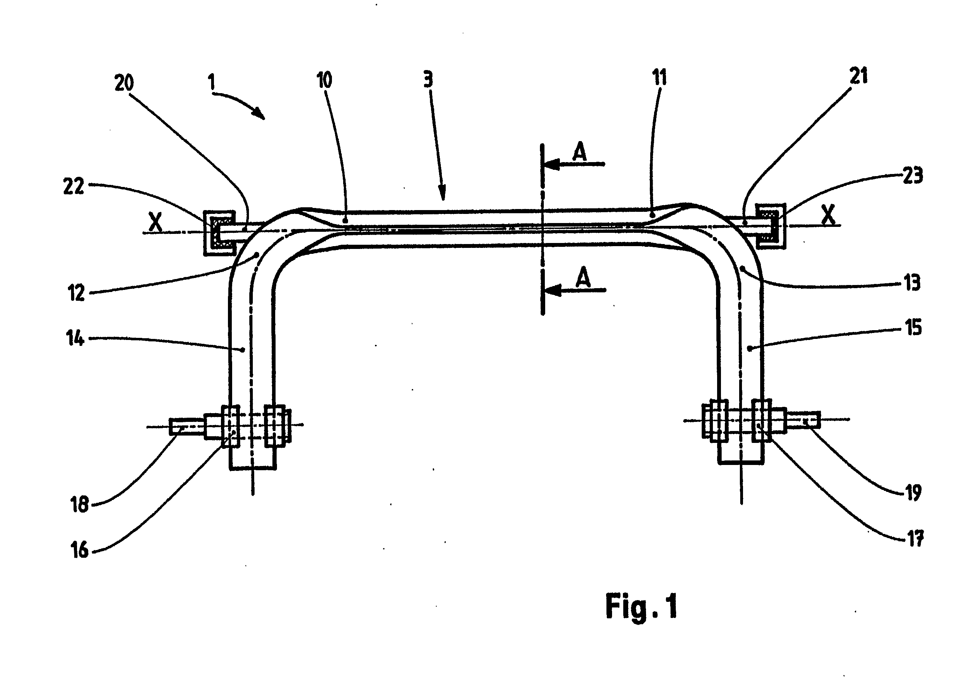

La figure 1 représente, de façon schématique, un essieu semi-rigide monobloc (1) suivant l'invention.

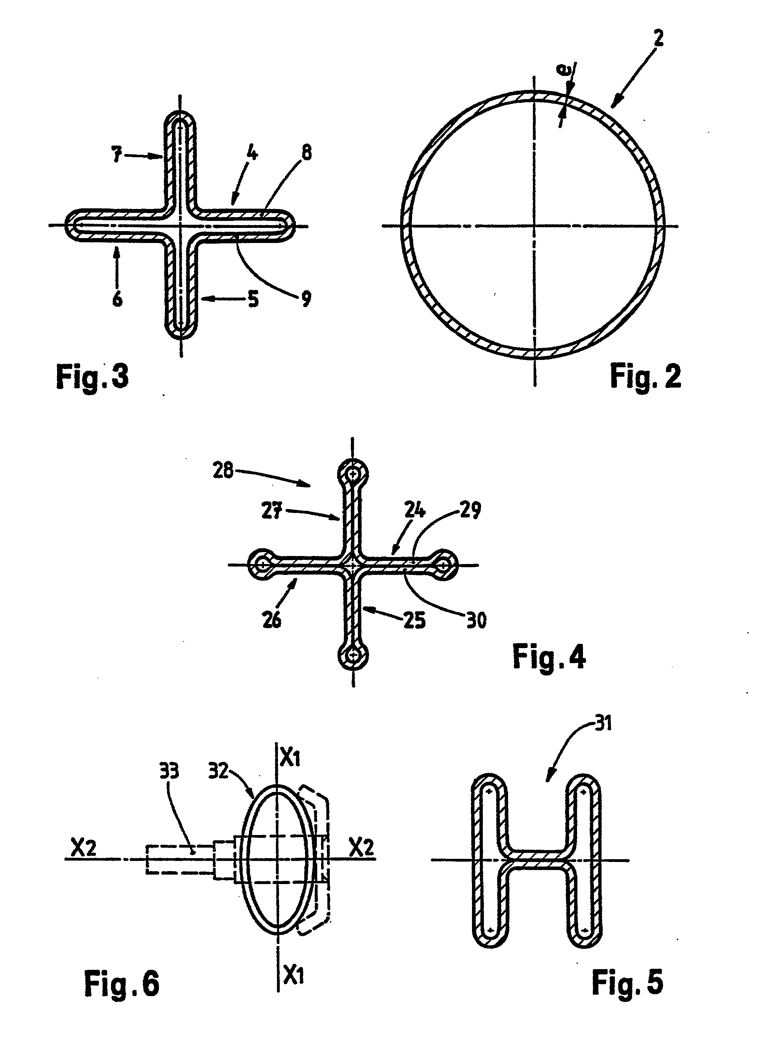

Cet essieu est réalisé à partir d'une seule longueur d'un tube en acier, de révolution, dont une section (2), agrandie par rapport à l'échelle de la figure 1, est montrée figure 2. Ce tube a une épaisseur constante (e) d'une extrémité à l'autre. La traverse (3) de l'essieu est réalisée par déformation de la zone médiane de ce tube.

On lui confère ainsi la forme d'un profilé rectiligne dont la section (A-A) est représentée figure 3. On voit que ce profilé comporte quatre ailes (4,5,6,7) réparties en X autour de l'axe (X-X). Chacune de ces ailes comporte une double paroi, telle que (8,9), qui résulte de la mise en forme du tube de départ. Un tel profilé présente une grande résistance à la flexion, peu inférieure à celle du tube de révolution initial. Ce profilé présente une résistance à la torsion élastique beaucoup plus faible que celle du tube initial et, de plus, il permet d'importantes déformations en torsion d'une extrémité de la traverse par rapport à l'autre sans sortir du domaine élastique. On voit qu'à chacune de ses extrémités (10,11), la traverse est prolongée par une zone tubulaire, cintrée à angle droit (12,13) et un bras tubulaire rectiligne (14,15). Dans le cas du présent exemple, ces bras ont une section de révolution.

A l'extrémité de chacun des bras sont fixées des attaches (16,17) qui portent les fusées (18,19) sur lesquelles seront montées les roues.

De façon connue, cet essieu est relié à la caisse non représentée du véhicule par des moyens de liaison articulés, tels que des tourillons (20,21) fixés à l'essieu suivant un axe parallèle à l'axe (X-X) de la traverse et montés en rotation dans des paliers élastiques (22,23) solidaires de la structure résistante de cette caisse. On comprend qu'un tel essieu permet la rotation de l'un des bras (14) ou (15) par rapport à l'autre, dans un plan sensiblement perpendiculaire à l'axe (X-X), grâce à l'aptitude à la torsion élastique de la traverse, avec création d'un couple de rappel qui tend à ramener les deux bras dans un même plan. L'angle maximal de rotation de l'un des bras par rapport à l'autre, avec retour élastique, dépend des caractéristiques mécaniques de l'acier constituant la traverse, de son profil et de ses dimensions.

De façon connue, des ressorts non représentés reliés d'une part à la caisse du véhicule et d'autre part à chacun des deux bras permettent de transmettre aux roues la charge du véhicule. Ces ressorts sont, de façon connue, des ressorts hélicoïdaux, des barres de torsion ou autres. De façon connue également, des amortisseurs non représentés permettent de contrôler les déplacements en rotation des bras autour de l'axe (X-X).

Différents profils peuvent être conférés à la traverse afin d'accroître sa capacité de déformation en torsion élastique tout en conservant une résistance élevée à la flexion. Les figures 4 et 5 représentent deux sections de profilés qui peuvent être réalisés dans la zone médiane d'un tube pour former la traverse d'un essieu suivant l'invention. Dans le cas de la figure 4, les quatre ailes (24,25,26,27) du profilé (28) comportent des doubles parois telles que (29,30) plaquées l'une contre l'autre, ce qui accroît l'aptitude à la torsion.

La section en H du profilé (31) représenté figure 5 permet de privilégier la résistance à la flexion de la traverse pour des contraintes orientées dans des directions particulières pour lesquelles on souhaite obtenir la plus grande rigidité en flexion. En ce qui concerne les bras, ceux-ci peuvent avoir une section circulaire comme dans le cas de la figure 1. Il est possible aussi de leur donner une section plus ou moins ovalisée ou d'autres formes tubulaires relativement voisines afin de privilégier également leur résistance à la flexion dans une direction déterminée. Dans le cas de la figure 6, la section de bras (32) représentée est ovalisée de façon que son grand axe de symétrie (X1-X1) soit perpendiculaire à l'axe (X2-X2) de la fusée (33) représentée en tirets. On limite ainsi l'aptitude à la flexion du bras lorsque celui-ci est déplacé en rotation autour de l'axe (X-X) de la traverse. Il peut être avantageux d'ovaliser la section du bras de façon que son grand axe soit au contraire parallèle à celui de la fusée pour réduire le déplacement transversal des roues en virage. Il est possible aussi de modifier la section de chaque bras au voisinage de la zone de fixation de la fusée de façon à rendre cette fixation plus facile. On peut en particulier déformer localement la section du bras, pour lui donner par exemple un profil en U permettant un montage plus facile de la pièce de fixation de la fusée.

A titre d'exemple, on a réalisé, en partant d'un tube à section circulaire de diamètre 70 mm et d'epaisseur 1,7 mm, en acier E 36 selon NFA 35501 présentant, à l'état de référence, une limite élastique E 0,2 % de 360 MPa, un essieu selon l'invention répondant aux caractéristiques suivantes :
- traverse : longueur profilée 700 mm, section en X selon figure 3, longueur d'aile (8,9) 22 mm
- bras : section ovalisée selon figure 6, longueur selon axe (X1-X1) 90 mm, longueur selon axe (X2-X2) 46 mm
susceptible de résister, en torsion, à un couple de 300 Nm avec une déformation angulaire de la traverse de 20°.

L'essieu selon l'invention peut être réalisé dans d'autres matériaux que les aciers, le choix du matériau ressortant des compétences normales du constructeur d'essieux. Afin d'accroître les caractéristiques mécaniques, on peut, le cas échéant, dans le cas d'un essieu en acier, après mise en forme de l'essieu suivant l'invention, effectuer un traitement thermique total ou localisé.

**Revendications**

1. Essieu semi-rigide en forme de U, pour véhicule, comportant une traverse reliée de façon articulée à la caisse de ce véhicule et deux bras (14, 15) aux extrémités desquels sont fixées les fusées (18, 19) sur lesquelles sont montées les roues, caractérisé en ce qu'il a une structure monobloc tubulaire, la zone médiane dudit essieu qui constitue la traverse (3) étant profilée de façon à présenter au moins une aile (4) à double paroi (8, 9) et en ce qu'à chaque extrémité de la traverse, au-delà de la zone profilée, existe une zone cintrée sensiblement à angle droit (12, 13) qui se prolonge par un bras (14, 15) à l'extrémité duquel est prévue la fixation de la fusée (16, 19) sur laquelle sera montée la roue.

2. Essieu suivant revendication 1, caractérisé en ce que le profil de la traverse, vue en coupe, est de préférence en L, en V, en T, en U, en X ou en H.

3. Essieu suivant revendication 1 ou 2, caractérisé en ce que dans les zones cintrées, la section tubulaire est sensiblement circulaire.

4. Essieu suivant l'une des revendications 1 à 3, caractérisé en ce que dans la zone médiane profilée, les deux parois (29, 30) d'au moins une aile sont au contact l'une de l'autre.

5. Essieu suivant l'une des revendications 1 à 4, caractérisé en ce que les bras ont, au moins sur une partie de leur longueur, une section circulaire ou ovalisée (32) ou une section tubulaire voisine.

6. Essieu suivant l'une des revendications 1 à 5, caractérisé en ce qu'il est en acier.

7. Essieu suivant l'une des revendications 1 à 6, caractérisé en ce que son épaisseur présente des variations en certaines zones réparties sur la longueur.

8. Procédé de réalisation d'un essieu semi-rigide en forme de U, comportant une traverse reliée de façon articulée à la caisse du véhicule et deux bras aux extrémités desquels sont fixées les fusées sur lesquelles sont montées les roues, caractérisé en ce qu'on met en oeuvre une seule longueur d'un tube métallique, de section circulaire ou non circulaire, dont on déforme la zone médiane, de façon à lui donner la forme d'un profilé rectiligne, comprenant au moins une aile à double paroi, ce profilé constituant la traverse de l'essieu, et en ce qu'on cintre sensiblement à angle droit la partie tubulaire au-delà de chaque extrémité de la zone profilée, en réservant une longueur suffisante de tube, au-delà de chaque zone cintrée, pour constituer les bras d'essieu aux extrémités desquels seront fixées les fusées sur lesquelles seront montées les roues.

9. Procédé suivant revendication 8, caractérisé en ce qu'on déforme la zone médiane du tube de façon à obtenir un profilé dont la section est en L, en V, en T, en U, en X ou encore en H.

10. Procédé suivant revendication 8 ou 9, caractérisé en ce que les bras d'essieu sont, sur la majeure partie de leur longueur, de section circulaire ou ovalisée ou d'autre section tubulaire voisine.

11. Utilisation d'un essieu suivant l'une des revendications 1 à 7 à la réalisation du train-arrière d'un véhicule automobile.

## Patentansprüche

1. Halbsteife Achse in U-Form für ein Fahrzeug mit einer Traverse, die mit dem Wagenkasten dieses Fahrzeugs gelenkig verbunden ist, und zwei Armen (14, 15), an deren Enden die Achslager (18, 19) befestigt sind, auf denen die Räder montiert sind, dadurch gekennzeichnet, daß sie einen einstückigen rohrförmigen Aufbau hat, wobei die die Traverse (3) bildende mittlere Zone der Achse derart profiliert ist, daß sie wenigstens einen Flügel (4) mit doppelter Wand (8, 9) aufweist, und daß an jedem Ende der Traverse, jenseits der profilierten Zone, eine rund im rechten Winkel abgebogene Zone (12, 13) existiert, die sich durch einen Arm (14, 15) verlängert, an dessen Ende die Befestigung des Achslagers (18, 19) vorgesehen ist, auf dem das Rad montiert wird.

2. Achse nach Anspruch 1, dadurch gekennzeichnet, daß das Profil der Traverse, im Schnitt gesehen, vorzugsweise in Form von L, V, T, U, X oder H ist.

3. Achse nach Anspruch 1 oder 2, dadurch gekennzeichnet, daß der rohrförmige Querschnitt in den abgebogenen Zonen genau kreisförmig ist.

4. Achse nach einem der Ansprüche 1 bis 3, dadurch gekennzeichnet, daß in der mittleren profilierten Zone die beiden Wände (29, 30) wenigstens eines Flügels im gegenseitigen Kontakt sind.

5. Achse nach einem der Ansprüche 1 bis 4, dadurch gekennzeichnet, daß die Arme wenigstens auf einem Teil ihrer Länge einen kreisförmigen oder ovalen Querschnitt (32) oder einen ähnlichen rohrförmigen Querschnitt haben.

6. Achse nach einem der Ansprüche 1 bis 5, dadurch gekennzeichnet, daß sie aus Stahl ist.

7. Achse nach einem der Ansprüche 1 bis 6, dadurch gekennzeichnet, daß ihre Dicke Schwankungen in bestimmten, über ihre Länge verteilten Zonen aufweist.

8. Verfahren zur Herstellung einer halbsteifen Achse in U-Form mit einer Traverse, die mit dem Wagenkasten des Fahrzeugs gelenkig verbunden ist, und zwei Armen, an deren Enden die Achslager befestigt sind, auf denen die Räder montiert sind, dadurch gekennzeichnet, daß man eine einzige Länge eines metallischen Rohres von kreisförmigem oder nicht-kreisförmigem Querschnitt einsetzt, wovon man die mittlere Zone derart verformt, um ihr die Form eines geradlinigen Profilstücks zu geben, das wenigstens einen Flügel mit doppelter Wand aufweist, wobei dieses Profilstück die Traverse der Achse bildet, und daß man den rohrförmigen Teil jenseits jeden Endes der profilierten Zone rund im rechten Winkel abbiegt, wobei man jenseits jeder abgebogenen Zone eine ausreichende Rohrlänge bewahrt, um die Achsenarme zu bilden, an deren Enden die Achslager zu befestigen sind, auf denen die Räder zu montieren sind.

9. Verfahren nach Anspruch 8, dadurch gekennzeichnet, daß man die mittlere Zone des Rohres derart verformt, um ein Profilstück zu erhalten, dessen Querschnitt in Form von L, V, T, U, X oder auch H ist.

10. Verfahren nach Anspruch 8 oder 9, dadurch gekennzeichnet, daß die Achsenarme über den größeren Teil ihrer Länge von kreisförmigem oder ovalem Querschnitt oder von einem anderen ähnlichen rohrförmigen Querschnitt sind.

11. Verwendung einer Achse nach einem der Ansprüche 1 bis 7 zur Herstellung des Hinterfahrgestells eines Kraftfahrzeugs.

**Claims**

1. A semi-rigid axle of U-shaped configuration for a vehicle comprising a transverse portion which is pivotally connected to the body of said vehicle and two arms (14, 15), to the ends of which are fixed the stub axles (18, 19) on which the wheels are mounted, characterised in that it is of a tubular one-piece structure, the central zone of said axle which constitutes the transverse portion (3) being so profiled as to have at least one limb (4) of double wall structure (8, 9), and that at each end of the transverse portion, beyond the profiled zone, there is a zone (12, 13) which is curved substantially at a right angle and which is extended by an arm (14, 15), at the end of which is provided the fixing for the tub axle (18, 19) on which the wheel will be mounted.

2. An axle according to claim 1, characterised in that the profile of the transverse portion as viewed in section is preferably that of a L, V, T, U, X or H.

3. An axle according to claim 1 or 2, characterised in that in the curved zones the tubular section is substantially circular.

4. An axle according to one of claims 1 to 3, characterised in that in the profiled central zone the two walls (29, 30) of at least one limb are in contact with each other.

5. An axle according to one of claims 1 to 4, characterised in that, at least over a part of their length, the arms are of a circular or ovalised section (32) or a similar tubular section.

6. An axle according to one of claims 1 to 5, characterised in that it is of steel.

7. An axle according to one of claims 1 to 6, characterised in that the thickness thereof has variations in certain zones which are distributed over the length.

8. A process for producing a semi-rigid axle of U-shaped configuration for a vehicle comprising a transverse portion which is pivotally connected to the body of said vehicle and two arms, to the ends of which are fixed the stub axles on which the wheels are mounted, characterised by using a single length of a metal tube, of circular or non-circular section, the central zone of which is so deformed as to impart thereto the shape of a straight profiled portion comprising at least one limb with a double wall structure, the profiled portion constituting the transverse portion of the axle, and by curving substantially at a right angle the tubular part beyond each end of the profiled zone, reserving a sufficient length of tube beyond each curved zone to constitute the axle arms, at the ends of which will be fixed the stub axles on which the wheels will be mounted.

9. A process according to claim 8, characterised by deforming the central zone of the tube so as to produce a profiled portion, the section of which is in the shape of a L, V, T, U, X or H.

10. A process according to claim 8 or claim 9, characterised in that, over the major part of their length, the axle arms are of circular or ovalised section or other similar tubular section.

11. Use of an axle according to one of claims 1 to 7 for producing the rear suspension assembly of a motor vehicle.

Fig. 1

**Fig. 3**

**Fig. 2**

**Fig. 4**

**Fig. 6**

**Fig. 5**